# EUROPEAN PATENT APPLICATION

(11) **EP 4 424 947 A1**
(43) Date of publication of application: **04.09.2024**
(21) Application number: 24161010.4
(22) Date of filing: 01.03.2024
(51) Int. Cl.: E04G 21/22, B25J 9/16, B25J 13/08, G05B 19/00

(54) **MODULAR BRICKLAYING SYSTEM**

(30) Priority: 02.03.2023 NL 2034250
(71) Applicant: Monumental B.V., 1054 HJ Amsterdam (NL)
(72) Inventor: al Khafaji, Salar, 1054 HJ AMSTERDAM (NL); Visser, Sebastiaan Floor, 1054 HJ AMSTERDAM (NL); Joubert, Philip, 1054 HJ AMSTERDAM (NL); Tsivanidis, Niall Alexander, 1054 HJ AMSTERDAM (NL); Gelderloos, Sietze Tobias, 1054 HJ AMSTERDAM (NL); Van Vugt, Joris Johannes Lambertus, 1054 HJ AMSTERDAM (NL)
(74) Representative: De Vries & Metman

(57) **Abstract**

Methods and systems are disclosed for automated bricklaying, in particular a method for controlling a modular bricklaying system. The modular bricklaying system comprises a control system and one or more work units selected from a collection of work units. The method comprises receiving or determining a digital representation of a building site and determining, in the digital representation of the building site, one or more reference markers in a coordinate system associated with the building site. The reference markers keep the same position relative to the building site during the building process. The method further comprises receiving or determining digital representations of each of the one or more work units, a building plan defining a target position for each of a plurality of bricks and a laying order for laying the plurality of bricks, and an initial position for at least part of the plurality of bricks. The method further comprises receiving position and pose information from one of the one or more work units, relative to the reference markers or to the building site, and updating the digital representation of the respective work unit and the building site based on the received position and pose information. The method further comprises transmitting, by the control system, commands to the one or more work units, the commands configuring the one or more work units to apply mortar and pick and lay bricks, wherein the commands are based on the digital representation of the building site, the digital representations of the respective work units, the initial position of the at least part of the plurality of bricks, and the building plan.

## Description

### Technical field

The disclosure relates to automated bricklaying, and in particular, though not exclusively, to methods and systems for automated bricklaying, and to a computer program product enabling a such a system to perform such methods.

### Background

Construction is one the biggest industries on earth (13% of worldwide GDP), but has experienced negative productivity growth in the last decades. In the industrialized world, construction has become more expensive (even when correcting for inflation), slower and, many feel, uglier. Meanwhile, acute labour shortages have been affecting the industry for over a decade now and demographic and social trends have made this a permanent secular trend. As a result, lack of affordable housing is one of the top problems affecting industrialized nations today.

One of the bottle necks in construction is masonry. Masonry is often applied to at least the outside of buildings because of its aesthetic value, but also for internal walls. However, labour supply of skilled masons is extremely limited and (partly as a consequence) labour cost around masonry has exploded in the last decade, going from about 300-400 EUR/1000 bricks to 700-1000 EUR/1000 bricks in Western Europe. There is, therefore, a widely felt need for ways to increase masonry output, yet reduce skilled labour requirements.

As a result, several bricklaying robots have been designed over the last decade. However, these are typically expensive, large, poorly scalable, and not very versatile apparatus. For example, many existing bricklaying robots require specific bricks and/or special glue, or they can only create prefab wall segments in a tightly controlled building environment, but cannot deal with the unpredictability of actual (outdoors) construction sites. Moreover, many such robots cannot operate well alongside human workers (e.g., masons), requiring either a very complicated (and hence, expensive) device that can do 'everything', or requires a complicated workflow allowing a human mason to perform more complicated tasks, e.g., laying bricks in a soldier course.

For example, US 2019/0032348 A1 describes a bricklaying system including a platform, a hopper, and a brick gripper. The system is mounted on rails to ensure levelling of the system and to provide movement around the construction site. However, this limits the places where the bricklaying system can go (for example, it is not suitable for internal walls), and in general effectively precludes simultaneous work by other people or machines. Furthermore, there is a significant set-up time to install the rails and the bricklaying system itself.

Hence, from the above, it follows that there is a need in the art for systems and methods for automated bricklaying that are more versatile.

### Summary

It is an aim of embodiments in this disclosure to provide a method and system that avoids, or at least reduces the drawbacks of the prior art.

In a first aspect, this disclosure relates to a method for controlling a modular bricklaying system. The modular bricklaying system comprises a control system and one or more work units selected from a collection of work units. The collection of work units may comprise one or more mortar application units and/or one or more bricklaying units. The method comprises receiving or determining a digital representation of a building site and determining, in the digital representation of the building site, one or more reference markers (e.g., visual reference markers) in a coordinate system associated with the building site. The reference markers keep the same position relative to the building site during the building process. The method further comprises receiving or determining digital representations of each of the one or more work units, receiving or determining a building plan defining a target position for each of a plurality of bricks and a laying order for laying the plurality of bricks, and receiving or determining an initial position for at least part of the plurality of bricks. The method further comprises receiving position and pose information from one of the one or more work units, relative to the reference markers or to the building site, and updating the digital representation of the respective work unit and the building site based on the received position and pose information. The method further comprises transmitting, by the control system, commands to the one or more work units, the commands configuring the one or more work units to apply mortar and pick and lay bricks, wherein the commands are based on the digital representation of the building site, the digital representations of the respective work units, the initial position of the at least part of the plurality of bricks, and the building plan.

A typical modular bricklaying system comprises one control system and one or more work units as described below. For example, the system may comprise a plurality of work units, e.g., a plurality of mortar application units and a plurality of bricklaying units, and/or a plurality of combined mortar application and bricklaying units. The plurality of work units may be controlled by a single control system. The control system can be implemented on one of the work units; for example, all work units may be capable of acting as control system, with one work unit being selected as such. This has the advantage that other work units can function as back-up in case there is a problem with the work unit acting as control system. Examples of modular bricklaying systems that can be controlled using this method are described below.

The initial position of at least part of the plurality of bricks can be part of the digital representation of the building site, or may be provided separately. In the latter case, the digital representation of the building site may be updated based on the received initial position

The position and pose may be determined with a precision of better than 1 cm, for example with a precision of about 1 mm. The position and pose may be determined by the work unit using a positioning module. The positioning module may comprise one or more submodules, e.g., a first one for coarse positioning and a second one for fine positioning.

The digital representations of the building site and of the work units may have a similar precision, e.g., better than 0.5 cm or about 1 mm. Thus, the control system contains a (high-precision) digital representation of the building site and the work units, and can therefore control the work units with equally high precision. Consequently, a guiding system is not needed to accurately control activities of the work units, and therefore, the work units may move substantially freely with respect to the building site, whilst still being capable of building a structure with the required precision (typically on the scale of fractions of centimetres or millimetres).

Thus, the work unit providing (high-precision) position and pose information to the control system and the control system sending commands to the work units based on that information and a digital representation of the building site, allows a flexible movement system. For example, no rails need to be laid and levelled. This, in turn, reduces preparation time for and increases flexibility of the modular bricklaying system. Because no fixed guiding system is used, a plurality of work units can be used without having to consider options for, e.g., crossings or overtaking. The ability to use a plurality of work units allows for greater flexibility in, e.g., cost management, building speed, et cetera.

The control system may comprise a communication module to communicate with each of the work units, and each of the work units may comprise a communication module to communicate with the control system. The communication can be wired or wireless using known electronic communication protocols.

In an embodiment, determining a digital representation of a building site comprises receiving a 3D scan of the building site, identifying, in the 3D scan, a plurality of first features with a known position relative to a to-be-build structure, and determining an origin and an orientation of a coordinate system based on the positions of the plurality of first features. The determination of a digital representation of a building site further comprises identifying, in the 3D scan, one or more second features with a known size and/or a known distance between each other, and determining a scale of the coordinate system based on the size of and/or distance between the one or more second features. The determination of a digital representation of a building site further comprises determining the digital representation of the building site based on the 3D scan of the building site and based on the coordinate system.

For example, the building site may be prepared in a way similar to existing building site preparation workflows. Currently, masons typically place masonry profiles defining an extent of a to-be-built structure and a vertical direction. Guide wires are attached between masonry profiles to indicate the height and level of a row of bricks and/or the thickness of a mortar layer. Therefore, the workflow as described herein requires only minor modifications to existing workflows for human masons.

In an embodiment, identifying a plurality of reference markers comprises identifying, in the digital representation, the plurality of reference markers, and determining the positions of the plurality of reference markers in the coordinate system associated with the building site.

For example, the above-mentioned masonry profiles and/or guide wires may be identified in the digital representation of the building site, and can then be used as reference markers; or if (visible) markers have been attached to them, the markers may be identified. This identification can be automated, using computer vision, or manually, e.g., using a `point and click' procedure. The masonry profiles or markers typically have known positions with respect to the to-be-built structure. As a rule, a system as described herein requires fewer masonry profiles and guide wires than a human mason.

In an embodiment, determining a building plan comprises receiving or determining a planned dimension (e.g., size) of a to-be-built structure (e.g., a wall segment), receiving or determining building parameters (e.g., brick size and masonry bond), determining a position of each of a plurality of bricks in the to-be-built structure, and determining a laying order defining an order in which the bricks are to be laid. The building plan may further comprise, e.g., openings for windows and/or door frames, et cetera.

In a further aspect this disclosure relates to a control system for a modular bricklaying system. The modular bricklaying system comprises one or more work units. The control system comprises a communication module for communicating with the one or more work units, a memory for storing computer-readable instructions, and a processor communicatively coupled to the memory and configurable to execute the computer-readable instructions. The processor is configured to, in response to executing the computer-readable instructions, perform one or more of the method steps as described above.

In a further aspect, this disclosure relates to a method for controlling a work unit in a modular bricklaying system. The method comprises determining a position and pose of the work unit relative to one or more reference markers or relative to the building site and/or one or more other work units. The reference markers have a known position relative to a building site and/or relative to the one or more other work units. The position and pose may be determined with a precision of better than 1 cm, for example with a precision of about 1 mm. The method further comprises transmitting the determined position and pose to a control system, receiving commands from the control system, and, in response to receiving the commands, controlling at least one actuator.

The control system can be a control system as described above. The control system and one or more work units may form a sort of client-server architecture, the control system being the server and the work units being the clients.

In a further aspect, this disclosure relates to a work unit for use in a modular bricklaying system. The modular bricklaying system comprises a control system. The work unit comprises at least one actuator, a communication module for communicating with the control system, a memory for storing computer-readable instructions, and a processor, communicatively coupled to the memory, configurable to execute the computer-readable instructions. The processor is configured to, in response to executing the computer-readable instructions, perform one or more of the method steps as described above.

Examples of work units are mortar application units and bricklaying units. Thus, the work units are configurable, by the control system, to build a to-be-built structure based on a building plan stored by the control system.

In an embodiment, the work unit comprises a camera (e.g., an optical camera) and an image processor. In this embodiment, the one or more reference markers are visual markers, and the image processor is configured to determine the position and/or orientation of the work unit based on images captured by the camera. The position and/or orientation of the work unit may be determined relative to the visual markers. If the visual markers have known positions relative to the building site or another work unit, a position relative to the building site, or other work unit, respectively, may be determined.

Alternatively or additionally, other known positioning methods may be used, e.g., based on beacons. In such an embodiment, the work unit comprises a receiver and a data processor. The one or more reference markers are transmitting beacons, and the data processor is configured to determine the position of the work unit based on signals received by the receiver. The position and/or orientation of the work unit may be determined relative to the beacons. If the beacons have known positions relative to the building site or another work unit, a position relative to the building site, or other work unit, respectively, may be determined.

An advantage of this method is that it is easy to integrate into existing workflows. For example, masons are used to mount guide wires that indicate the position of a brick layer. Instead of (or in addition to) mounting guide wires, visual markers and/or beacons may be mounted in similar locations. Usually, the reference markers define at least three axes of a coordinate system, typically a Cartesian coordinate system. Any kind of suitable visible marker may be used, e.g., bar codes, QR codes, April tags, et cetera.

These positioning methods may be supplemented with (other) optical methods, e.g., to position the work unit relative to an already built wall or foundation element. Often, a masonry wall is built outside and parallel to an inner wall sheet (typically provided with insulation material). Thus, existing structures may be used to fine-tune or check the position information.

In an embodiment, the work unit is configured to move essentially freely relative to the building site and/or the one or more other work units. For example, the work unit may comprise wheels configured for riding over a building site, or a caterpillar.

The building site is typically an out-doors building site, usually with an unpaved surface, e.g., a (compacted) dirt or a similar rough surface. Wheels for navigating such a surface are well-known in the art, as are caterpillars. They ensure that the work unit can move essentially freely without getting stuck.

In this context, moving substantially freely relative to the building site means in an at least essentially two-dimensional space over the building site. This contrasts with, e.g., rails-mounted systems or similar guided systems, which are essentially one-dimensional. Typical building robots in the art use either a controlled environment (e.g., a warehouse for building prefab elements), or a rails system. The rails system is then carefully positioned relative to the to-be-built structure and typically levelled. A (rails) guided or otherwise well-controlled system removes, or at least greatly simplifies the positioning problem; but as mentioned before, this also introduces a number of drawbacks. Setting up the rails is a time-consuming action, and the rails may prevent or at least hinder work by other workers, also when the building robot is not nearby.

In an embodiment, the work unit is configured for levelling itself. The work unit may comprise, e.g., three or more levelling feet, each controlled by an actuator, an inclination sensor, and a controller to control the actuators based on input received from the inclination sensor. A typical building site is not completely level. As it is generally important that walls are built vertically, it is advantageous for the work units, or at least part thereof, to be level. In some embodiments, the entire work unit is levelled. In other embodiments, only part of the work unit, e.g., a platform, is levelled. In such an embodiment, the work unit may comprise, e.g., a platform that is rotatable over two horizontal axes, actuators to control rotation over said axes, an inclination sensor, and a controller to control the actuators based on input received from the inclination sensor. The functional parts of the work unit (e.g., hopper, gripper, or mixer) are then mounted on the platform.

In an embodiment, the work unit has a mass and/or one or more spatial dimensions based on a typical human mass or spatial dimensions and/or constrained by a construction or safety protocol. For example, the work unit may have a mass of less than or equal to 150-250 kg and/or a height of less than or equal to 2.0-2.3 m and/or a width of less than or equal to 0.7 m and/or a length of less than or equal to 1.0-1.3 m. This way, the work unit can be fitted in human-based projects or existing workflows without major adjustments. For example, the work unit can pass through doorways designed for humans, use scaffolding designed for humans, et cetera. This also allows the work unit to work in parallel, e.g., simultaneously with or even physically next to huma workers. This is especially advantageous as part of the work may be performed by humans; for example, the bricks may be laid by a work unit, while a human applies wall ties to connect the wall under construction to an existing wall sheet.

In some embodiments, a work unit may have an adjustable height, for example a telescopic or foldable arm. This way, the work unit can be configured to have a height of less than or equal to a specified maximum height (e.g., the height of a standard doorway) when moving around (e.g., through a doorway), while still being able to work larger heights (e.g., up to a ceiling), when needed.

Thus, the system for bricklaying need not be capable of performing all tasks associated with bricklaying, so that the work units can be kept relatively simple and economical.

In an embodiment, the work unit comprises a hopper for storing and applying mortar. The hopper may be movable relative to a base of the work unit. In such an embodiment, the at least one actuator is arranged to operate the hopper.

Additionally or alternatively, the work unit may comprise a gripper for picking up and laying bricks. The gripper may be movable relative to the base of the work unit. In such an embodiment, the at least one actuator is arranged to operate the gripper.

Additionally or alternatively, the work unit may comprise a conveyor system for storing bricks, and wherein the at least one actuator is arranged to operate the conveyor system.

In an embodiment, a hopper and a gripper may be mounted on the same work unit. This reduces the amount of work units required (and thus, e.g., wheels, levelling mechanisms, et cetera) and simplifies the relative positioning of the hopper and the gripper.

In an embodiment, the hopper is part of a mortar application module comprising a monitoring camera for monitoring mortar being applied by the mortar application module. In an embodiment, the gripper is part of a bricklaying module comprising a monitoring camera for monitoring bricks being gripped and/or laid by the gripper.

Images obtained by the monitoring camera may be used to fine-tune the action of the hopper or gripper, e.g., to ensure that the gripper grips exactly a centre part of a brick. In some embodiments, the same camera may be used for the positioning system and for the monitoring task.

In an embodiment, the work unit may, additionally or alternatively, comprise a mortar mixing module, a brick picking module (optionally comprising a brick cutter), et cetera. In general, the system is not particularly limited with respect to which functionality is implemented on each work unit, and several combinations can be envisaged by the skilled person. For example, the gripper and the hopper can be mounted on a single crane, on two cranes on the same wheel base, or on two different vehicles. Each implementation may have its own advantages and disadvantages, based on the particulars of, e.g., the building site.

In a further aspect, this disclosure relates to a modular system for bricklaying. The modular system for bricklaying comprises at least one control system and one or more work units as described herein. Typically, the modular system comprises at least one mortar application unit and at least one bricklaying unit.

One aspect of this disclosure relates to a computer comprising a computer readable storage medium having computer readable program code embodied therewith, and a processor, e.g., a microprocessor, coupled to the computer readable storage medium, wherein responsive to executing the computer readable program code, the processor is configured to perform any of the methods described herein.

One aspect of this disclosure relates to a computer program or suite of computer programs comprising at least one software code portion or a computer program product storing at least one software code portion, the software code portion, when run on a computer system, being configured for executing any of the methods described herein.

One aspect of this disclosure relates to a non-transitory computer-readable storage medium storing at least one software code portion, the software code portion, when executed or processed by a computer, is configured to perform any of the methods described herein.

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fibre, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fibre, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Moreover, a computer program for carrying out the methods described herein, as well as a non-transitory computer readable storage-medium storing the computer program are provided. A computer program may, for example, be downloaded (updated) to the existing data processing systems or be stored upon manufacturing of these systems.

Elements and aspects discussed for or in relation with a particular embodiment may be suitably combined with elements and aspects of other embodiments, unless explicitly stated otherwise. The embodiments will be further illustrated with reference to the attached schematic drawings. It will be understood that the disclosure is not in any way restricted to these specific embodiments. Identical reference signs refer to identical, or at least similar elements.

### Brief description of the drawings

**Fig. 1A** depicts a schematic overview of a system according to an embodiment and **Fig. 1B** shows a screenshot of a digital representation of a system according to an embodiment;
**Fig. 2** depicts a schematic overview of a system according to an embodiment;
**Fig. 3A** and **3B** show examples of control loops according to embodiments;
**Fig. 4** is a flow chart of a method according to an embodiment;
**Fig. 5A-C** are flow charts for methods steps of methods according to embodiments;
**Fig. 6** is a flow chart of a method according to an embodiment;
**Fig. 7** is a flow chart of a method according to an embodiment.; and
**Fig. 8** is a block diagram illustrating an exemplary data processing system that may be used for executing methods and software products described in this application.

### Detailed description

The embodiments in this disclosure aim to provide methods and systems for automated brick laying. In particular, a modular system is described comprising one or more work units for applying laying bricks and a control system for controlling the one or more work units is described. Typically, the work units are autonomous in the sense that the work units are independent from each other and from the building site. For example, in principle, individual work units may be added to and removed from the system without impacting the other work units in the system. The work units are also autonomous in that they can move substantially freely over the building site, without the requirement of rails or other physical guidance structures. However, the work units are dependent on the control system.

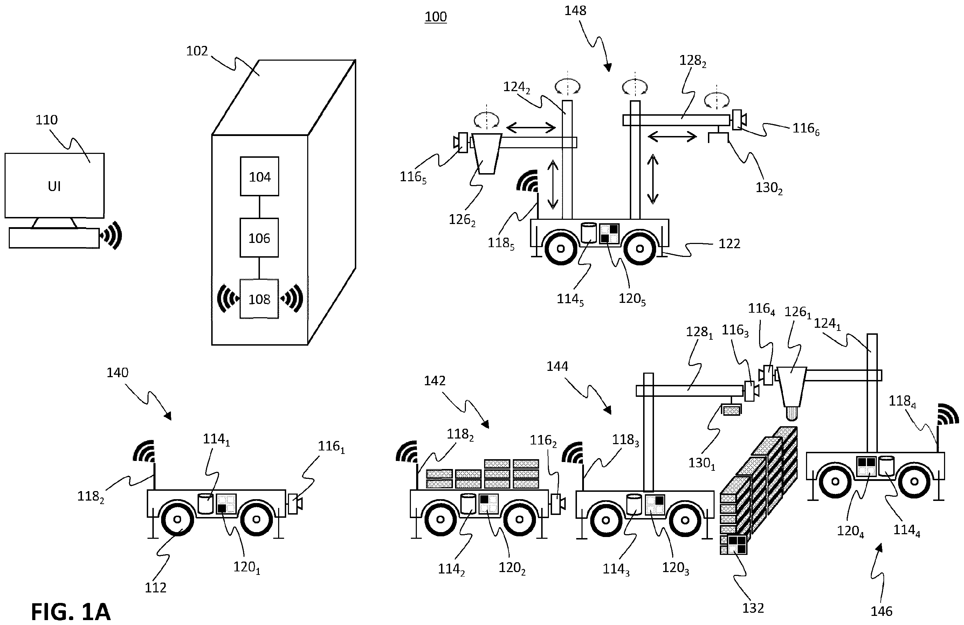

**Fig. 1A** depicts a schematic overview of a system according to an embodiment. The system comprises a control system **102** and one or more work units **140-148.** The control system comprises a memory **104** for storing computer-readable instructions, a processor **106** communicatively coupled to the memory configurable to execute the computer-readable instructions, and a communication module **108** for communicating with the work units. The communication with the work units may be wired or wireless. The control system may further comprise or be configurable to communicate with a user interface **110.** The user interface may be used to provide input to the control system and/or to show output provided by the control system. For example, the user interface may be used to define a position and layout of a to-be-built structure.

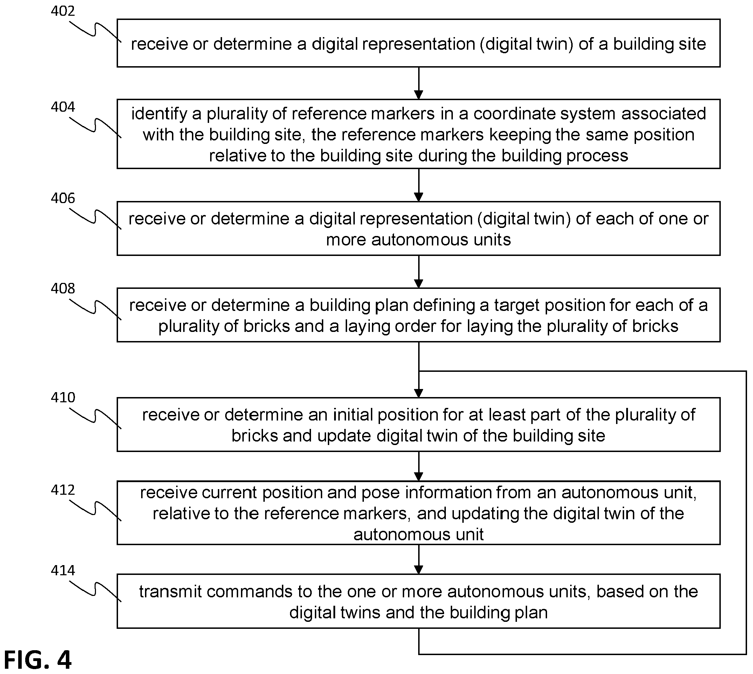

For example, the control system **102** may be implemented as a personal computer, e.g., a laptop, tablet or mobile phone, configured to execute method steps as described below with reference to **Fig. 4****.** The control system may also be implemented as a cloud-based system. The control system can also be implemented on one of the unit controllers **114₁₋₅.** For example, one or more of the unit controllers may comprise software to operate as the system controllers, with one of the unit controllers being selected to actually perform the described functionality of the control system. The other systems can then function as back-up control systems.

In the depicted example, the work units **140-148** each have a unit controller **114₁₋₅,** a camera **116₁₋₆,** and a communication module **118₁₋₅.** The unit controller comprises a memory for storing computer-readable instructions and a processor, communicatively coupled to the memory, for executing the computer-readable instructions. The unit controller is configured to control the work unit, based on instructions received from the control system.

The work units are configured for determining a position and pose of the work units and to transmit (using the communication module) the determined position and pose to the control system. The position and pose may be determined with a precision of better than 1 cm, e.g., with a precision of about or less than 1 mm. The position and pose is typically determined with respect to reference markers **132** that have a fixed position and orientation with respect to the building site and/or with respect to reference markers **120₁₋₅** that have a fixed position and orientation with respect to other work units. The translation to a position with respect to the building site may be made either by the work unit or by the control system.

To this end, in the depicted example, each work unit comprises an optical camera **116₁₋₆** and an image processor. The image processor can be part of the unit controller **114₁₋₅,** or separate. The image processor is configured to recognise reference markers (in this case, visual reference markers **120₁₋₅,132**) in images obtained by the camera. Any kind of suitable visible marker may be used, e.g., bar codes, QR codes, April tags, et cetera. The image processor is further configured to determine the position and/or orientation of the work unit based on images captured by the camera. This may be implemented using generally available libraries, e.g., using the OpenMVG and OpenMVS libraries. Methods to do this are known in the art, e.g. B. Pfrommer et al., `TagSLAM: Robust SLAM with Fiducial Markers', available on-line on https://arxiv.org/abs/1910.00679v1, which is hereby incorporated by reference.

The position and/or orientation may be determined relative to the visual markers **120₁₋₅,132.** If the visual markers have known positions relative to the building site or another work unit, a position relative to the building site, or other work unit, respectively, can be determined. Typically, the position relative to the reference markers is determined by the work unit, and the translation to a position relative to the building site (or to another work unit) is determined by the control system, but in principle, each part can be performed by either party.

Alternatively or additionally, other known positioning methods may be used, e.g., based on beacons. In that case, the work unit may comprise a receiver configured to receive signals emitted by the beacons, and a data processor. The data processor may then be configured to determine the position of the work unit based on signals received by the receiver. Methods to do this are known in the art.

Typically, at least some of the work units are configured to move essentially freely relative to the building site and/or the one or more other work units. For example, the work unit may comprise wheels **112** configured for riding over a building site, or a caterpillar. The building site is typically an out-doors building site, usually with an unpaved surface, e.g., a (compacted) dirt or a similar rough surface. Wheels for navigating such a surface are well-known in the art, as are caterpillars. They ensure that the work unit can move essentially freely without getting stuck. In some cases, some work units may be essential stationary with respect to the building site, e.g., a work unit configured for mixing and dispensing mortar may not need to move around if other work units can move to this unit.

Some or all of the work units **140-148** may be configured for levelling themselves. As shown in this example, a work unit may comprise a plurality of levelling feet **122.** The levelling feet may be controlled by actuators. The work unit may further comprise an inclination sensor, and a controller to control the actuators based on input received from the inclination sensor. In other embodiments, other levelling mechanisms may be used. In some cases, only part of the work unit, e.g., a platform, is levelled. In such cases, the work unit may comprise, e.g., a platform that is rotatable over two horizontal axes, actuators to control rotation over said axes, an inclination sensor, and a controller to control the actuators based on input received from the inclination sensor.

Different work units may use the same or similar hardware, reducing unit cost. For example, all work units may use the same base, the same locomotion system, the same levelling mechanism, the same hardware for the unit controller, et cetera. Each base unit **140** may then be equipped with one or more additional modules, such as a mortar application module comprising a hopper mounted on a movable arm, and/or a bricklaying module comprising a gripper mounted on a movable arm, and/or a brick supply module.

The work units **140-148** in the depicted example have substantially human dimensions and/or dimensions based on building and/or safety protocols (aimed at humans) standardized or typical sizes of construction equipment such as scaffolding. For example, a building protocol may specify that a minimum height for a doorway is 210 cm and a minimum width for a doorway is 80 cm; then the work unit may be configured (during locomotion) to have a height of less than 210 cm and a width of less than 80 cm. In order to be backwards compatible, the work unit may be constrained by older building standards (typically specifying smaller dimensions for, e.g., doorways), for example, for use in renovation work. As a further example, standard scaffolding may have a depth of 60 cm and could be certified for users of up to 200 kg; then the work unit may have a length of less than 60 cm and a mass of less than 200 kg. In different countries and for different applications, different limits may apply. The dimensions can also be based on typical human dimensions. For example, the work units can have a mass of less than or equal to 150 kg and/or a height of less than or equal to 2.0 m and/or a width of less than or equal to 0.7 m and/or a length of less than or equal to 1.0 m. This way, the work unit can be fitted in human-based projects or existing workflows without major adjustments.

In the shown examples, the mortar application modules **124_{1,2}** and the bricklaying modules **128_{1,2}** feature a fairly simple crane-like structure. In more typical embodiments, the horizontal arm may have an elbow-like joint, allowing greater flexibility. Alternative solutions will be readily apparent to one skilled in the art, e.g., a foldable or telescopic arm. Additionally, the work unit may have an adjustable height, for example a (vertical) telescopic or foldable arm or a scissor lift. This way, the work unit can be configured to have a height of less than or equal to 2.2 m when moving around (e.g., through a doorway), while still being able to work larger heights (e.g., up to a ceiling), when needed. A 6 degree of freedom (6-dof) robot arm may similarly be used, but the currently commercially available 6-dof robot arms are typically quite expensive. For most bricklaying tasks, a more economical structure with 4 degrees of freedom will do. These 4 degrees of freedom can be, for example: vertical motion, rotation around a first vertical axis (the 'shoulder'), radial motion relative to the first vertical axis (the `elbow'), and rotation around a second vertical axis (the 'wrist').

In general, at least one of the work units comprises a mortar application module **124_{1,2}.** The mortar application module comprises a hopper 126_{1,2} for storing and applying mortar. The hopper may be movable relative to the base of the work unit. The mortar application module may comprise at least one actuator arranged to operate the hopper. Operating the hopper may comprise, e.g., correctly positioning the hopper relative to the to-be-built structure and releasing a correct amount of mortar. A work unit comprising a mortar application module may be configured (by the control system) to refill itself when the hopper is empty.

Similarly, in general, at least one of the work units comprises a bricklaying module **128_{1,2}.** The bricklaying module comprises a gripper **130_{1,2}** for picking up and releasing (laying) bricks. The gripper may be movable relative to the base of the work unit. The bricklaying module may at least comprise one actuator arranged to operate the gripper. Operating the gripper may comprise, e.g., correctly positioning the gripper relative to a stack of brick to pick a brick, moving the gripper in order to correctly position the gripper relative to the to-be-built structure, and releasing the brick.

In an embodiment, a mortar application module **124₂** and a bricklaying module **128₂** may be mounted on the same (base) work unit **148.** This reduces the amount of work units required (and thus, e.g., wheels, levelling mechanisms, et cetera) and simplifies the relative positioning of the hopper and the gripper.

The mortar application module **124_{1,2}** may comprise a monitoring camera **116_{4,5}** for monitoring mortar being applied by the hopper **126_{1,2}.** Similarly, the bricklaying module **126_{1,2}** may comprise a monitoring camera **116_{3,6}** for monitoring bricks being gripped and/or laid by the gripper **130_{1,2}.** Images obtained by the monitoring cameras may be used to fine-tune the action of the hopper or gripper, e.g., to ensure that the gripper grips exactly a centre part of a brick. In some embodiments, the same camera may be used for the positioning system and for the monitoring task.

The collection of work units may further comprise, e.g., a brick cart **142** configured for providing a stack of bricks to a bricklaying unit. The brick cart may comprise one or more reference markers to facilitate the bricklaying unit to pick bricks from the brick cart. The control system may configure the brick cart to move to a brick storage when the brick cart is empty and to move to a bricklaying work unit when the brick cart has been filled. In principle, the brick cart may be integrated in the bricklaying unit; however, it has been found that in many cases, it may be beneficial to have a larger number of more specialised work units rather than a smaller number of all-round work units, as this provides greater flexibility.

The brick cart **142** may comprise a conveyor system for storing the bricks and an presentation plate for presenting (typically) a single brick. The conveyor system can be, e.g., a belt conveyor, a chain conveyor, a roller conveyor, or a different suitable conveyor system. The brick cart may be configured to move the conveyor system such that a new brick is moved to the presentation plate once the previous brick has been removed form the presentation plate. The brick cart may comprise, e.g., a camera to detect the presence or absence of a brick on the presentation plate. Alternatively and/or additionally, other methods may be used, such as, e.g., a weight sensor under the presentation plate.

The presentation plate may be positioned lower than the end of the conveyor belt, such that a brick rotates from a 'standing' to a 'lying' position when dropping from the conveyor belt onto the presentation plate. Bricks are commonly stacked on pallets on their side (i.e., in standing position), and current tools for loading bricks are similarly geared to loading bricks in a standing position; however, bricks are typically laid in a lying position. The described implementation takes care of the rotation from standing to lying. Consequently, neither the gripper (described above) nor the brick picker (described below) need to be able to rotate the bricks in this way, simplifying their construction.

Bricks typically have the shape of a parallelepiped with sides with three distinct sizes, i.e., two large sides, two small sides, and two intermediate sides (by area). As used herein, a brick is said to be 'lying' if it is resting on one of its sides with the largest area. A brick is said to be standing if it is resting on one of the other sides, typically one of the intermediate sides.

The collection of work units may further comprise, e.g., a brick picker configured for picking bricks from a pallet and stacking them on a brick cart. The brick picker may comprise a cutter to cut bricks to a desired size, when necessary. The skilled person can readily devise other functions that can be added to or replace the functions of one or more work units, such as a mortar mixing unit, et cetera.

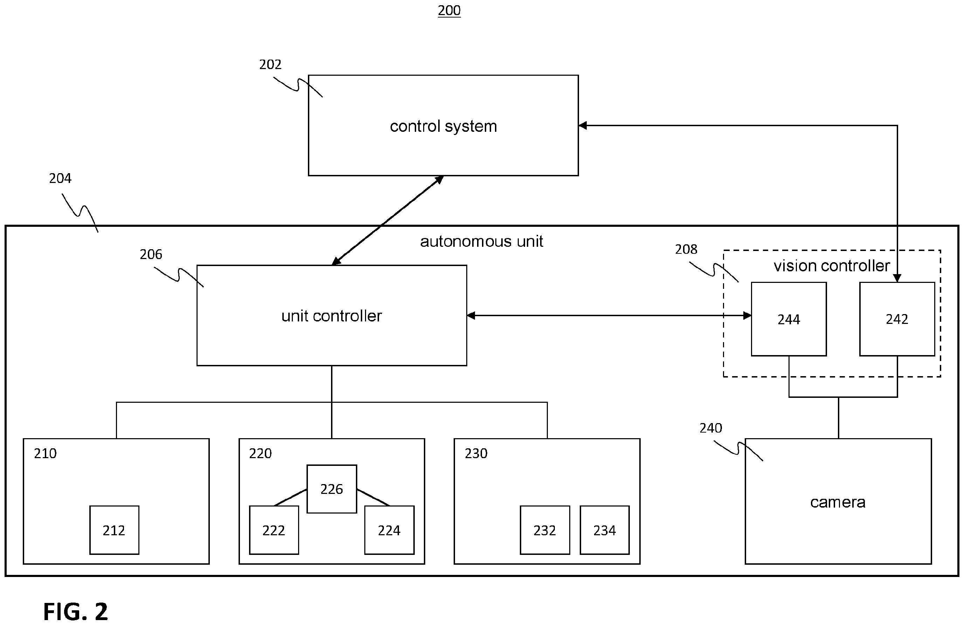

An example of a work unit is described in more detail below with reference to **Fig. 2****.**

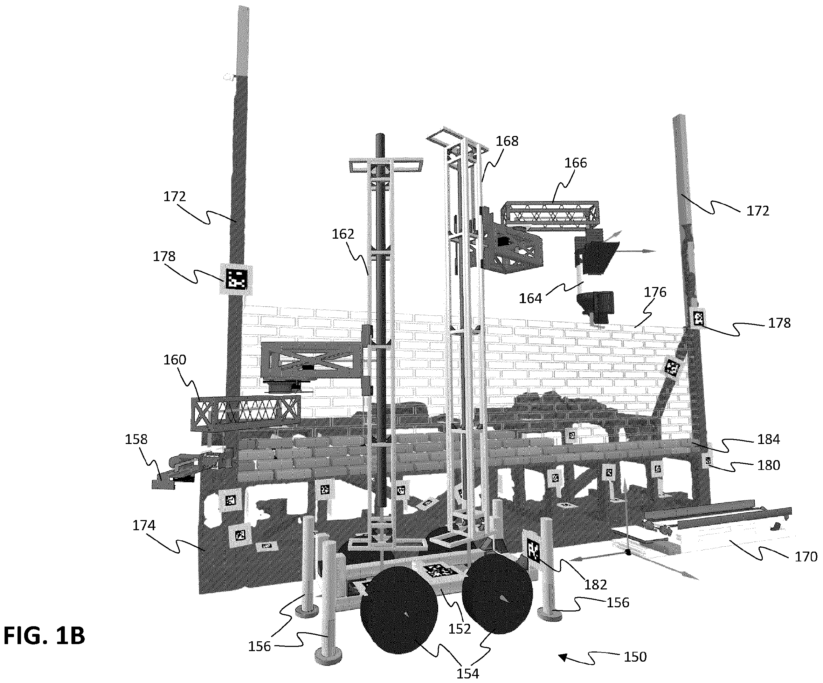

**Fig. 1B** shows a screenshot of a digital representation of a system according to an embodiment. In particular, **Fig. 1B** shows a screenshot of a digital representation of a building site and a work unit. The work unit **150** is similar to work unit **148** as described with reference to **Fig. 1A****.** The work unit **150** comprises a base **152** to which a plurality of wheels **154** and a plurality of levelling feet **156** are attached.

The work unit **150** comprises a brick-laying unit with a gripper **158** rotatably connected to a hinged arm **160,** which is in turn connected to a vertical, rotatable shaft **162** in a way that allows vertical motion of the arm. The work unit further comprises a mortar application unit with a hopper **164** which is (in a similar fashion) rotatably connected to a hinged arm **166,** which is in turn connected to a vertical, rotatable shaft **168** in a way that allows vertical motion of the arm.

The screenshot furthermore shows a digital representation of a brick cart **170,** which is here shown as an immobile brick chart.

The screenshot furthermore shows to masonry profiles **172,** which define the extent of the to-be-built wall **176.** They can also be used to define a vertical direction in the digital representation of the building site. The masonry profiles can be identified using visual markers **178,** in this case April tags. Similar visual markers **182** are used to identify the work unit **150.** In this example, a relatively large number of additional visual markers **180** in different orientations is used. It is noted that the exact position of these markers may be determined during an initial phase, e.g., relative to the known positions of makers **178,** and need not be known very precisely beforehand. Once the positions of these visual markers are known, they may be used for localisation by the work units, even when the visual markers used to gauge the digital representation are not visible to the relevant work unit.

The digital representation also comprises a reconstruction **174** of the building site, shown as a shaded background. This reconstruction is based on images captures by the work unit **150,** using photogrammetry. The digital representation shows the bricks that are to be laid using an outline, whereas the already laid bricks **184** are shown as massive bricks. The mortar in between the bricks is not shown in this image.

**Fig. 2** depicts a schematic overview of a system according to an embodiment. A modular system **200** for bricklaying comprises a control system **202** and one or more work units **204,** communicatively connected to the control system. The control system maintains a digital twin of the building site (including a plan to be build) and of the work units present at the building site.

Each work unit **204** comprises one or more subsystems **210,220,230** and a unit controller **206** for controlling the one or more subsystems. Each subsystem typically comprises one or more actuators **212,222,232** for operating a part of the work unit, and one or more sensors **224,234** for determining a status of the respective part. In some cases, a subsystem only comprises one or more actuators, or one or more sensors. An example of a subsystem is a gripper, comprising an actuator for opening and closing the gripper, and a sensor for determining whether the gripper is open or closed, and potentially to what extent. The actuator may be controlled directly by the unit controller; in other cases, the subsystem may comprise a sub-controller for controlling the actuator.

Information received from the sensors **224,234** is sent to the control system **202.** The control system can use this information to update the digital twin of the respective part of the respective work unit.

Information received from the sensors **224,234** may also be used by the unit controller **206,** for example to interpret a command from the control system **202.** For instance, the unit controller may receive a command to put the gripper at a certain height, and the unit controller may use information from a height sensor to determine whether the gripper should be raised, lowered, or remain at the same height.

Information received from the sensors **224,234** may furthermore be used to detect errors, e.g., if the controller provides a command (e.g., to move some part of the work unit) and the sensor information indicates that the command is executed (e.g., the part does not move). This may indicate an error in the work unit such as a malfunctioning part, or an error in the digital representation of the building site, such as the presence of an obstacle that is not being accounted for.

Optionally, a subsystem **220** may comprise a sub-controller **226.** The sub-controller is communicatively connected to the unit controller **206.** The sub-controller may control the actuator **222** based on a control command received from the unit controller and based on input from the sensor **224.** For example, a levelling subsystem may comprise a plurality of actuators for operating a plurality of levelling feet, a sensor determining an inclination of the levelling subsystem, and a sub-controller configured to control the plurality of actuators and to receive input from the sensor. In response to a command received from the unit controller, the sub-controller may control the plurality of actuators in a closed control loop, based on input from the sensor. The subsystem may further comprise a plurality of sensors determining the positions of the plurality of levelling feet.

Each work unit **204** furthermore comprises a camera **240,** communicatively connected to a vision controller **208.** The camera captures images of an environment of the work unit. The environment typically comprises a plurality of (unique) visual markers. For example, each of the work units may comprise one or more markers identifying the work unit and, possibly, a side of the work unit. The building site may be prepared by placing visual markers relating the building site to the building plan. The vision controller is configured to receive image data (e.g., individual photos or a stream of video frames), to recognise the visual markers, and to estimate a position of the visual marker relative to the camera at the moment of capturing, e.g. as described above with reference to **Fig. 1A****.** The vision controller may be configured to combine information from a plurality of images to improve relative position estimates.

The estimated relative position of the visual marker is sent to the control system **202,** which may deduce a position and pose of the work unit based on estimated relative positions of a plurality of visual markers and information of the camera position at the moment of capturing the image. The control system uses this position and pose to determine or update the position and pose of the digital twin of the respective work unit.

The vision controller **208** may comprise one or more vision modules **242,244.** For example, a first vision module **242** may be configured to determine position and pose information of the work unit, while a second vision module **244** may be used to fine-tune a position and pose of a subsystem, e.g., the position of a gripper that is about to grip or lay a brick. In the depicted example, the first vision module **242** communicates with the control system **202,** while the second vision module **244** communicates with the unit controller **206.** Other embodiments may have different arrangements. The one or more vision modules may share the same hardware and/or comprise dedicated hardware.

It is noted that the physical arrangement does not need to correspond one-on-one with the logical arrangement. For example, camera **240** may be physically attached to one of the subsystems **210,220,230,** e.g., to the crane next to the gripper. In that case, movement of the camera may be controlled by the actuator of the corresponding subsystem, while the data stream generated by the camera is processed by the vision controller **208.** Some implementations may have more than one camera, e.g., a first camera attached to the crane near the gripper and a second camera attached to the locomotion unit. Each camera may feed into a separate vision module, or the cameras may share one or more vision modules.

Thus, a hierarchy of control loops can be distinguished. At the highest level, the control system **202** controls the one or more work units **204,** based on information received from an external source, e.g., a building plan and locations of reference markers on the building site, and based on information received from the one or more work units, typically sensor data and position data derived from image data. Typically, the control system sends control commands to the unit controller.

At an intermediate level, the unit controller **206** controls the one or more subsystems based on commands received from the control system and, typically, based on information received from the respective subsystems, and possibly information derived from image data. At the lowest level, a subsystem may have an internal control loop, e.g., a proportional-integral-derivative controller (PID controller) which is used to execute a command received from the unit controller. Although only three levels are described, in some cases, more control loop levels may be present, e.g., for error corrections.

In general, the smaller the interaction with the environment, or the faster a (sub)system needs to respond, the tighter (lower level) the corresponding control loop will be. Conversely, the more a (sub)system interacts with other (sub)systems or the more complex an interaction, the higher the level of the corresponding control loop will be. For example, levelling only affects a single subsystem of a single unit, and may thus be implemented at the lowest level; collision detection may be implemented at the intermediate level, and collaboration between work units will be implemented at the highest level.

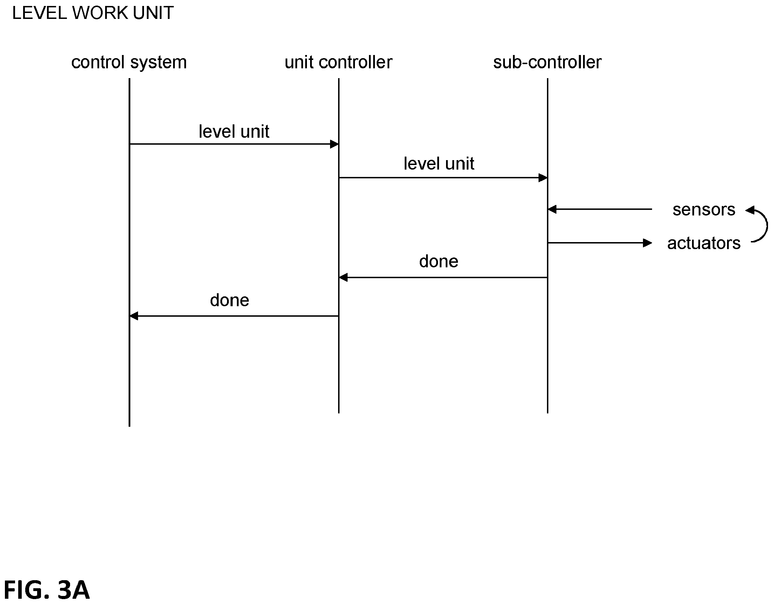

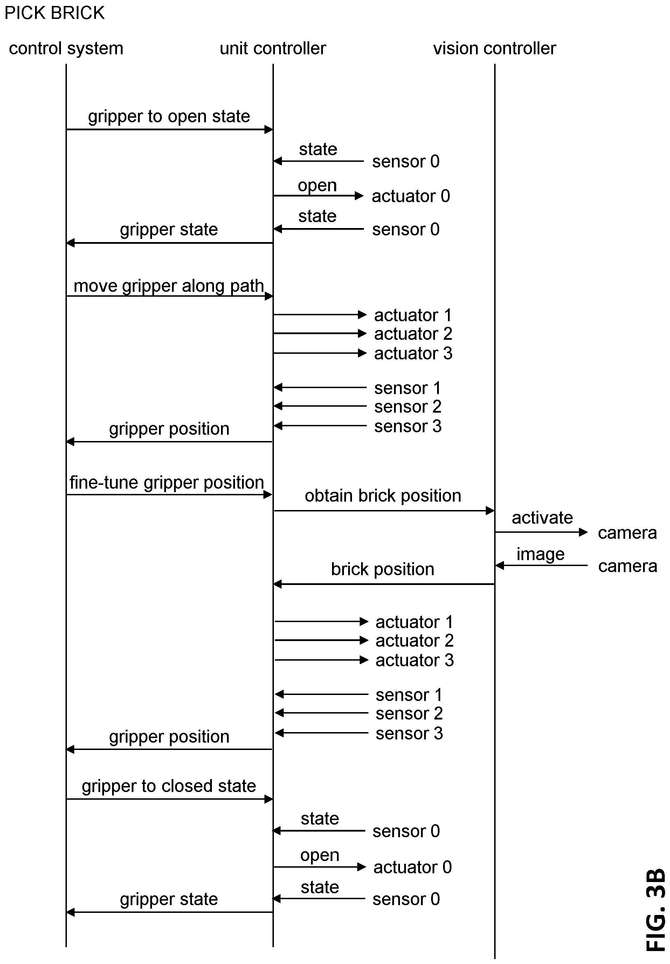

**Fig. 3A** and **3B** show examples of control loops according to embodiments. **Fig. 3A** shows a straightforward example of a command to level the work unit. The control system has determined that the work unit is at the correct position and needs to be levelled before taking further actions (e.g., picking and laying a brick, or applying mortar). Thus the control system transmits a command `level unit' to the work unit. The command is processed by the work unit's unit controller. The unit controller determines that the command `level unit' must be executed by the sub-controller associated with the levelling module, and transmits the command `level unit' to the relevant sub-controller. The sub-controller receives sensor data from one or more sensors indicating whether the work unit is currently level, and activates one or more actuators in order to level the work unit if the sensors indicate the work unit is not yet level. This may be implemented using an internal control loop.

When the sub-controller determines that the work unit is level, it may send a message `done' to the unit controller indicating that the work unit is level. The unit controller may then transmit a message `done' to the control system indicating that the work unit is level

The actual implementation may comprise further data exchange not shown in this figure. For example, the unit controller may acknowledge correct receipt of the command using an acknowledgement message. Further variations on messaging protocols are well-known in the art.

**Fig. 3B** shows an example of a command sequence to pick a brick. The location of the brick, or at least the approximate location, is available to the control system. In this example, the control system first sends a command 'gripper to open state' to the work unit. The command is processed by the work unit's unit controller. The unit controller receives sensor data indicating the current state of the gripper. If the gripper is already open, no action needs to be taken, if the gripper is closed, the unit controller activates an actuator in order to open the gripper. The unit controller again receives sensor data indicating the current state of the gripper, and transmits the gripper state to the control system.

The control system determines a path along which the gripper must move towards the brick. The control system takes into account the positions of other objects (e.g., a nearby mortar application unit, or the already built part of the wall) when determining the path. The positions of these other objects are stored in the digital representation of the building site.

The command is again processed by the unit controller, which activates a plurality of actuators and receives input from a plurality of sensors indicating the activity of the actuators. Once the path has been traversed, the unit controller transmits the final gripper position to the control system.

The control system subsequently sends a command to fine-tune the gripper position. If the position of the brick relative to the gripper is known with sufficient precision (e.g., exactly in the centre), the brick may be laid with high precision (e.g., by specifying the position of the centre of the brick as the gripper position when laying the brick). In this example, the unit controller sends a command to the work unit's vision controller to obtain a high-precision brick position. In response, the vision controller activates a camera mounted on the gripper and receives an image. Based on this image, the vision controller determines a high-precision position of the brick relative to the gripper, and sends the brick position to the unit controller. In response, the unit controller activates the plurality of actuators in order to correct the gripper position based on the (relative) brick position. The unit controller receives sensor data from the plurality of sensors indicating the activity of the actuators, and transmits the fine-tuned position of the gripper to the control system.
the control system then sends a command `gripper to closed state' to the unit controller. The unit controller receives sensor data indicating the current state of the gripper. The unit controller activates the actuator in order to close the gripper. The unit controller again receives sensor data indicating the current state of the gripper, and transmits the gripper state to the control system.

Various alternatives are equally possible. In the depicted example, the open/close command is binary, but in other examples, a finer scale may be used, e.g. a one-byte value indicating how far the gripper should be opened with 0 indicating completely closed, 128 indicating half open, and 255 indicating completely open. In the depicted example, the unit controller returns the gripper state to the control system, but in other examples, the unit controller may return a success or failure code. Other examples are readily apparent to the skilled person.

**Fig. 4** is a flow chart of a method according to an embodiment. In essence, the method comprises controlling one or more work units to lay bricks to build a structure using a digital twin of the building site and the one or more work units. The concept of 'digital twins' (or `cyber-physical fusion') are applied/under development in a variety of domains including manufacturing, logistics and smart cities. The basic idea is for a physical object (or collection of objects) to have a digital representation upon which e.g. planning and optimisation can be conducted in a manual or automated fashion, e.g. in order to predict and analyse the behaviour/response of the object before applying selected commands to the physical object itself.

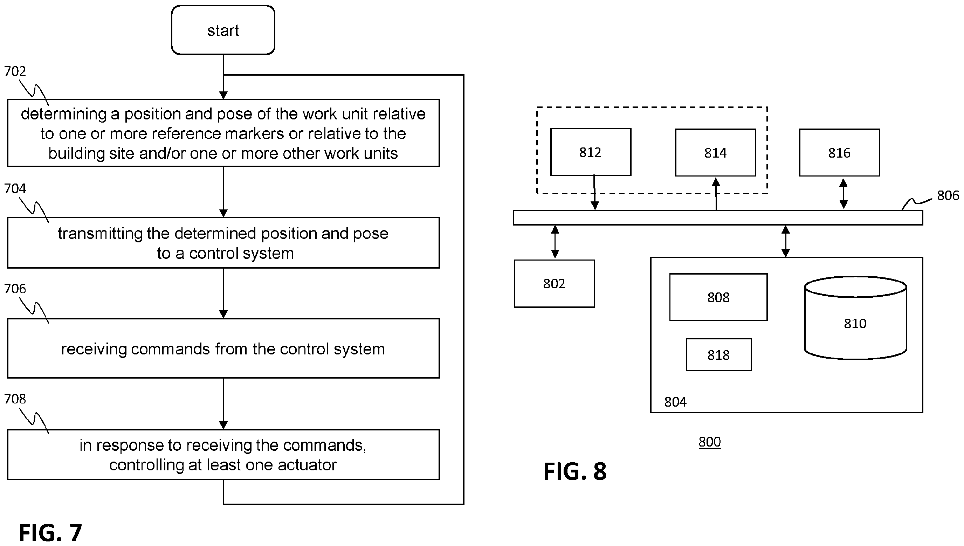

More in particular, **Fig. 4** is a flow chart of a method for controlling a modular bricklaying system, e.g. as described above with reference to **Fig. 1A****.** The modular bricklaying system comprises a control system and one or more work units selected from a collection of work units. The collection of work units comprises one or more mortar application units and/or one or more bricklaying units. Each of the work units comprises a positioning module and a locomotion module (e.g., wheels or a caterpillar). The control system comprises a memory for storing computer-readable instructions and a processing unit, communicatively coupled to the memory for executing the instructions. An exemplary embodiment of the control system is shown in **Fig. 8****.** Thus, the processing unit may be configured to perform one or more of the following steps.

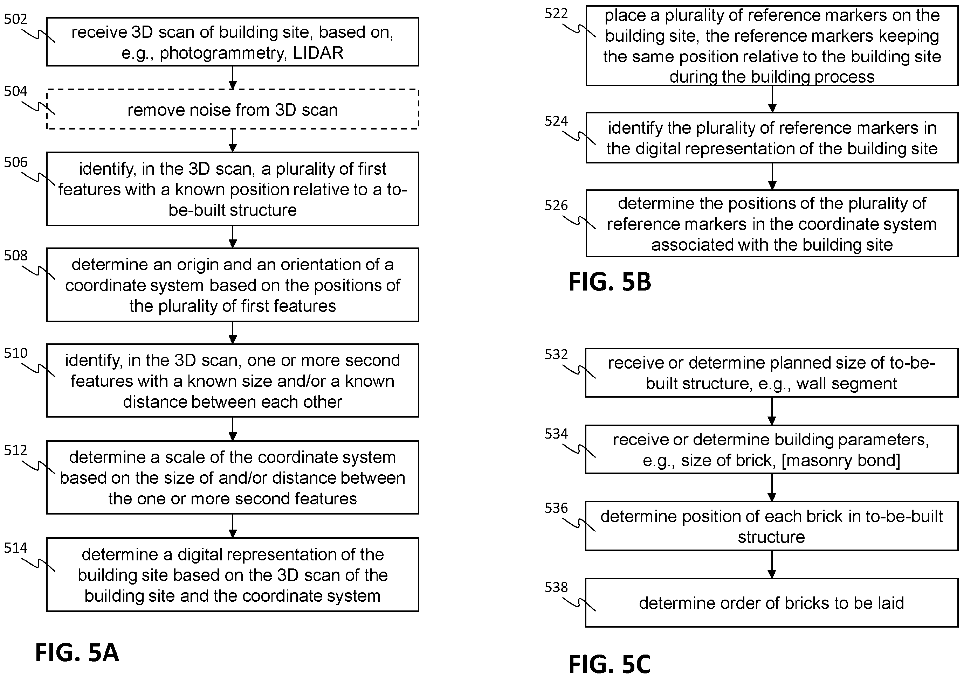

A step **402** comprises receiving or determining a digital representation of a building site. The digital representation may be referred to as a digital twin of the building site. This step may comprise further steps as shown in **Fig. 5A****.** The digital representation may be based on, e.g., photogrammetry, LIDAR, or other known methods to create a 3D representation of a physical environment. The digital representation of the building site should at least comprise the location of the to-be-built structure and the working space for the work units. The digital representation of the building site may further comprise (more or less permanent) obstacles that are present on or around the working space of the work units. The digital representation comprises information linking positions in the digital representation to positions in the real world, e.g., a coordinate system with a known origin, orientation, and scale relative to the building site.

A step **404** comprises identifying, in the digital representation of the building site, a plurality of reference markers in a coordinate system associated with the building site. The reference markers should keep the same position and orientation relative to the building site during the building process. Depending on the implementation, the reference markers may be identified automatically and/or manually. This step may comprise further steps as shown in **Fig. 5B****.**

The reference markers are used by the work units to determine their position. In a vision-based system, optical markers may be used such as April tags, QR codes, or the like. Additionally or alternatively, other features may be used, such as corners of neighbouring buildings, et cetera. In a beacon-based system, suitable beacons (or receivers, if the beacons are mounted on the work units) may be used. Other positioning systems known in the art may also be used. In a typical building project, uncertainties up to about 1 mm are considered acceptable, and therefore, the work units should in general be able to determine their position relative to the reference markers with a precision of about 1 mm or less. In other building projects, spatial precision requirements may be higher or lower, which similarly affects the requirements on the positioning system.

If the reference markers have a known position and orientation, the reference markers may be used to determine the origin, orientation, and scale of the digital representation of the building site. In that case, steps **402,404** may be combined into a single step.

A step **406** comprises receiving or determining digital representations of each of the one or more work units. These digital representations may also be referred to as digital twins of the one or more work units. Using the digital twin of the building site and the digital twins of the one or more work units, the system may simulate and optimise the building process.

A step **408** comprises receiving or determining a building plan defining a target position for each of a plurality of bricks, and a laying order for laying the plurality of bricks. This step may comprise further steps as shown in **Fig. 5C****.**

A step **410** comprises receiving or determining an initial position for at least part of the plurality of bricks. Depending on the implementation and the building site workflow, this can be a heap of bricks or a pallet stacked with bricks, or stacks of bricks on a work unit (e.g., a brick cart). The initial position may be approximate, for example, just the location of a heap of bricks. For example, the modular system may comprise a work unit (e.g., a brick picker) configured for picking bricks from a heap and stacking them on a brick cart. In another example, the bricks may be stacked on the brick cart manually; in that case, the brick cart may be configured to recognise the stacked bricks and transmit that information to the control system, or an operator may manually input the number and positions of the bricks on the brick cart in the control system. It is noted that not all bricks in the building plan need to be present to start laying bricks.

A step **412** comprises receiving position and pose information from the one or more work units. The position and pose information may be defined relative to the plurality of reference markers. This step may further comprise updating the digital representation of the respective work unit and the digital representation of the building site based on the received position and pose information. The position and pose information may be based on, e.g., data from a (vision-based and/or beacon-based) positioning module, other sensor data (e.g., keeping track of motor rotations), et cetera.

A step **414** comprises transmitting commands to the one or more work units. The commands configure the one or more work units to do the actual building, i.e., applying mortar and picking and laying bricks. The commands are based on the digital representation of the building site, the digital representations of the respective work units (including the position and pose information of the respective work units), the initial position of the at least part of the plurality of bricks, and the building plan.

In brief, the control system knows where the bricks are and where they should go, and can determine how the bricks get there. Based on that knowledge, the control system configures the work unit(s) to build at least part of the to-be-built structure. For example, the control system may configure the work units to move the bricks in the correct order from the initial position to the target position in the structure that is being built, and to apply mortar as necessary.

**Fig. 5A** is a flow chart for methods steps for determining a digital representation of a building site. These steps can be performed by the control system, for example, or by a different system configured to transmit the determined digital representation to the control system.

A step **502** comprises receiving a 3D scan of the building site. The 3D scan may be based on, e.g., photogrammetry, LIDAR, and/or other known methods to determine a 3D scan of an environment. In the case photogrammetry is used, cameras mounted on the work units may be used to provide the input images for the photogrammetry. Typically, the scan is obtained shortly before the start of the brick laying, to ensure that the digital representation of the building site is as accurate as possible. Usually, the building site has been prepared before the 3D scan is obtained; for example, masonry profiles may have been placed that indicate the position of the to-be-built structure. Placing masonry profiles is part of the standard workflow on building sites with human masons. The masonry profiles are typically placed exactly level, defining a vertical direction.

An optional step **504** comprises removing noise from the 3D scan, e.g., temporary elements, i.e., elements that are not present on the building site during the actual bricklaying. This may improve the quality of the digital representation.

A step **506** comprises identifying, in the 3D scan, a plurality of first features with a known position relative to a to-be-built structure. These first features may comprise, e.g., one or more masonry profiles, marks made upon the masonry profiles indicating a level of a first row of bricks to be laid, et cetera. The first features may also comprise the reference markers, provided their position is known with sufficient detail. In some embodiments, a reference marker may be attached to the first feature (e.g., the masonry profile), to facilitate automatic recognition. The first features may be identified automatically or manually.

A step **508** comprises determining an origin and an orientation of a coordinate system based on the positions of the plurality of first features. For example, a Cartesian coordinate system may be used, in which the z direction is based on the direction of the masonry profile, and in which the x direction is based on the direction of the to-be-built structure. On a typical building site, the direction of the to-be-built structure is indicated with a pair of masonry profiles.

A step **510** comprises identifying, in the 3D scan, one or more second features with a known size and/or a known distance between each other. The second features may be the same as the first features. Again, the reference markers may be used as the second features or to identify the second features. The second features may be identified automatically or manually.

A step **512** comprises determining a scale of the coordinate system based on the size of and/or distance between the one or more second features.

A step **514** comprises determining a digital representation (the digital twin) of the building site based on the 3D scan of the building site and the coordinate system. the digital representation comprises data about the building site and a coordinate system that links the digital representation to the physical reality.

The digital may be updated continuously or periodically based on, e.g., images received from the work units.

**Fig. 5B** is a flow chart for methods steps for identifying a plurality of reference markers. A step **522** comprises placing a plurality of reference markers on the building site. The reference markers should keep the same position and orientation relative to the building site during the building process, and should remain visible. In general, at least three reference markers are placed. A higher number of reference markers may lead to a more accurate position determination, and may provide redundancy.

A step **524** comprises identifying the plurality of reference markers in the digital representation of the building site. The reference markers may be identified automatically or manually. If the reference markers are visual reference markers, the reference markers can be identified using image recognition. If non-visual reference markers are used, the reference markers may comprise a visual marking to aid in identification. Known software may be used to identify the plurality of reference markers.

A step **526** comprises determining the positions (including orientation, when relevant) of the plurality of reference markers in the coordinate system associated with the building site. As the work units orient themselves, essentially, based on the reference markers, knowing the exact positions of the reference marker relative to the building site allows to determine the position and pose of the work units relative to the building site and, hence, to the to-be-built structure. If known software is used to determine the positions and orientations of the reference marker, e.g., a commercially available software package, the result is typically provided in a shared, but arbitrary coordinate system. Thus, this step may comprise a coordinate transformation from the output of the reference marker recognition software to the coordinate system of the digital twin of the building site.

**Fig. 5C** is a flow chart for method steps for determining a building plan. A step **532** comprises receiving or determining a planned size of a to-be-built structure, e.g., a wall segment. The planned size may be obtained from, e.g., a data file specifying the dimensions of the to be built structure such as a (digital) blueprint. The planned size may also be obtained from the 3D scan, e.g., by determining a distance between two masonry profiles

A step **534** comprises receiving or determining building parameters, e.g., brick size and masonry bond. The brick size may be determined by the system, e.g., by image analysis of images comprising one or more bricks, or may be provided as input. Masonry bond is typically provided as input. If bricks with different sizes are used (e.g., full-sized and half-sized), the size may be determined or received for each size. Other building parameters can be the corner type (e.g., toothed or using half bricks), the position or number of dilation joints, the positions or density of wall ties, et cetera.

A step **536** comprises determining a position of each of a plurality of bricks in the to-be-built structure. This step may comprise optimising the width of head joints between the bricks and possibly the thickness of the horizontal joints, in order to obtain an integer number of bricks in the horizontal and/or vertical directions. If only boundary conditions are given for certain building parameters (e.g., number of wall ties), this step can also comprise determining the exact planned position of the wall ties. Similarly, other building parameters may be optimised.

A step **538** comprises determining a laying order defining an order in which the bricks are to be laid. For example, if a target position of a first brick is below a target position of a second brick, the first brick typically needs to be laid before the second brick. This step may take into account properties of the work units, such as reach and horizontal and vertical movement speed. This step may also take into account, e.g., interaction between a plurality of work units, interaction with human masons, et cetera.

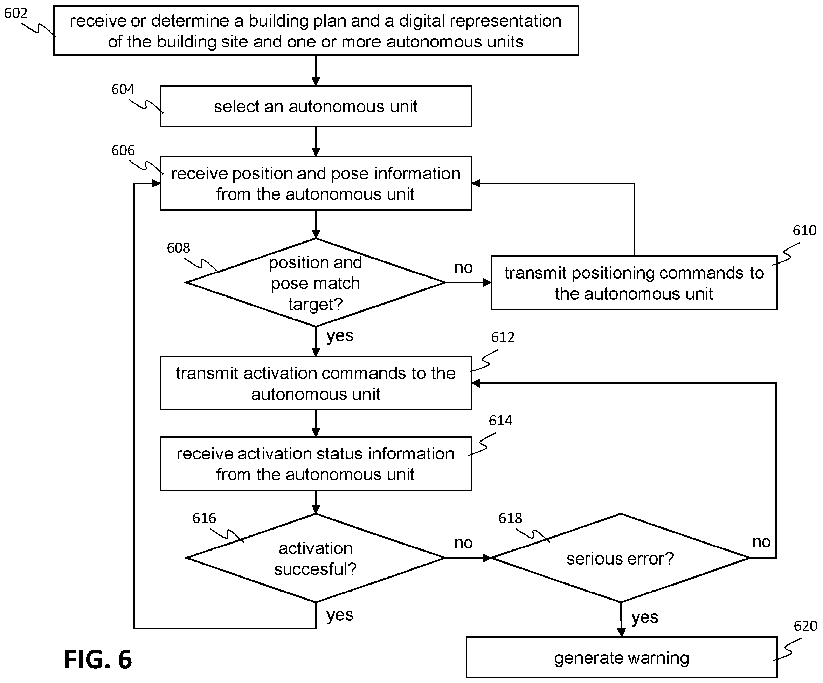

**Fig. 6** is a flow chart of a method according to an embodiment. The method steps may be executed by a control system as described above.

A step **602** comprises receiving or determining a building plan and a digital representation of the building site and one or more work units. Step **602** may comprise steps **402-410** as described above with reference to **Fig. 4****,** for example.

A step **604** comprises selecting a work unit from the one or more work units. A step **606** comprises receiving position and pose information from the work unit. The work units may be configured to periodically (e.g., one or more times each second) send position and/or pose information to the control system, and/or to send position and/or pose information to the control system when the work unit determines that its position and/or pose has changed (e.g., based on sensor data or because an actuator has been activated), and/or on request by the control system.

The position and pose information may be determined by the work unit relative to a plurality of reference markers that have been placed on the building site and whose positions are contained in the digital representation of the building site. The position information may have a precision of about 1 mm or better. Typically, the position of the positioning module is determined, e.g., the position of the camera in a vision-based system, or the position of a transmitter or receiver in a beacon-based system. Because the position of the positioning module relative to the work unit is known, the position of the work unit can be derived. The position and pose may be determined, e.g., multiple times per second.

The position and pose information may be enhanced using e.g. sensor data obtained from the work unit (e.g., encoders on the wheels, IMUs, inclinometers, accelerometers, et cetera) and/or data obtained from external sources, such as external cameras or nearby work units that perceive the selected work unit. The feature-based position and pose information determined by the position module and the sensor data and/or external image data may be combined using filters, e.g., a Kalman filter.

A step **608** comprises determining whether the received position and pose match a target position and pose. For example, a work unit may have been commanded to go to a specific location, and this step may comprise determining whether the work unit is acceptably close to the specified location. It is noted that in general, the locomotion need not be very precise, as small deviations in position of the work unit as a whole typically may be compensated by other parts of the work unit, provided the position is known with sufficient accuracy.

If the received position and pose of the work unit do not match the target position and pose, a step **610** comprises transmitting commands to the work unit that configure the work unit to adjust its position and/or pose.

If the received position and pose of the work unit match the target position and pose, a step **612** comprises transmitting commands to the work unit that configure the work unit to activate a function, e.g., picking or laying a brick, applying mortar, filling the mortar container, et cetera.

A step **614** comprises receiving activation status information from the work unit, e.g., whether the gripper of a brick laying unit opened or closed, whether a brick was picked or laid, et cetera.

A step **616** comprises determining, based on the received activation status information, whether the activation was successful. If the action was successful, steps 606-**616** are typically repeated a large number of times. Thus, for example, a brick-laying unit may be configured to move the gripper to a brick stockpile, grip a brick, move the gripper to the target position of the brick, and release the brick.

If the activation was not successful, a step **618** may comprise determining whether this constitutes a serious error. If not, the system may try again, and a new activation command may be transmitted to the work unit; otherwise, a warning may be generated **620,** alerting, e.g., a human to interfere and solve the problem.

It is noted that the granularity of the commands send to the work unit may depend on the implementation. For example, the work unit may receive a single command to pick a brick from a specified position, or may receive a series of commands to move the gripper to slightly above the specified position, open the gripper, move down to the specified position, and close the gripper.

Typically, the path along which a work unit or a component thereof moves, is specified by the control system. As the control system has a digital twin of the building site (including any obstacles and work units), it can ensure that the path does not lead to a collision. This is particularly relevant when two work units are working in close proximity, e.g., a mortar application unit and a brick-laying unit. Alternatively or additionally, the work unit may comprise a collision detector to prevent collisions.

**Fig. 7** is a flow chart of a method according to an embodiment. More in particular, **Fig. 7** is a flow chart of a method for controlling a work unit in a modular bricklaying system, e.g. as described above with reference to **Fig. 1A****.** The method steps may be performed, for instance, by a unit controller as described in the exemplary embodiment of a work unit described above with reference to **Fig. 2****.**

A step **702** comprises determining a position and pose of the work unit relative to one or more reference markers or relative to the building site and/or one or more other work units. The reference markers have a known position relative to a building site and/or relative to the one or more other work units. The position and pose may be determined with a precision of better than 1 cm, for example with a precision of about 1 mm. The position and pose of the wok unit may be determined using a positioning module as described above.

A step **704** comprises transmitting the determined position and pose to a control system. In response, the control system may update a digital representation of the work unit and/or of the building site. Furthermore, the control system may determine commands for configuring the work unit and transmit these to the work unit. A step **706** comprises receiving the commands from the control system. The determined position and pose may be transmitted, and the commands may be received using a communication module as described above.

A step **708** comprises, in response to receiving the commands, controlling at least one actuator. The at least one actuator may control, for instance, a locomotion module of the work unit, a mortar application module, a bricklaying module, et cetera.

**Fig. 8** is a block diagram illustrating an exemplary data processing system described in this disclosure. Data processing system **800** may include at least one processor **802** coupled to memory elements **804** through a system bus **806.** As such, the data processing system may store program code within memory elements **804.** Further, processor **802** may execute the program code accessed from memory elements **804** via system bus **806.** In one aspect, data processing system may be implemented as a computer that is suitable for storing and/or executing program code. It should be appreciated, however, that data processing system **800** may be implemented in the form of any system including a processor and memory that is capable of performing the functions described within this specification.

Memory elements **804** may include one or more physical memory devices such as, for example, local memory **808** and one or more bulk storage devices **810.** Local memory may refer to random access memory or other non-persistent memory device(s) generally used during actual execution of the program code. A bulk storage device may be implemented as a hard drive or other persistent data storage device. The processing system **800** may also include one or more cache memories (not shown) that provide temporary storage of at least some program code in order to reduce the number of times program code must be retrieved from bulk storage device **810** during execution.

Input/output (I/O) devices depicted as key device **812** and output device **814** optionally can be coupled to the data processing system. Examples of key device may include, but are not limited to, for example, a keyboard, a pointing device such as a mouse, or the like. Examples of output device may include, but are not limited to, for example, a monitor or display, speakers, or the like. Key device and/or output device may be coupled to data processing system either directly or through intervening I/O controllers. A network adapter **816** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Operation modems, cable operation modems, and Ethernet cards are examples of different types of network adapter that may be used with data processing system **800.**

As pictured in **FIG. 8****,** memory elements **804** may store an application **818.** It should be appreciated that data processing system **800** may further execute an operating system (not shown) that can facilitate execution of the application. Application, being implemented in the form of executable program code, can be executed by data processing system **800,** e.g., by processor **802.** Responsive to executing application, data processing system may be configured to perform one or more operations to be described herein in further detail.

In one aspect, for example, data processing system **800** may represent a client data processing system. In that case, application **818** may represent a client application that, when executed, configures data processing system **800** to perform the various functions described herein with reference to a "client". Examples of a client can include, but are not limited to, a personal computer, a portable computer, a mobile phone, or the like.

In another aspect, data processing system **800** may represent a server. For example, data processing system **800** may represent an (HTTP) server in which case application **818,** when executed, may configure data processing system **800** to perform (HTTP) server operations. In another aspect, data processing system may represent a module, unit or function as referred to in this specification.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the embodiments in the form disclosed. Many modifications and variations will be apparent to those of ordinary skill in the art without departing from the scope and spirit of the invention. The embodiments were chosen and described in order to best explain the principles and the practical application, and to enable others of ordinary skill in the art to understand the various embodiments with various modifications as are suited to the particular use contemplated.

## Claims

1. A method for controlling a modular bricklaying system, the modular bricklaying system comprising a control system and one or more work units selected from a collection of work units, the method comprising:
receiving or determining a digital representation of a building site;
determining, in the digital representation of the building site, one or more visual reference markers in a coordinate system associated with the building site, the visual reference markers keeping the same position relative to the building site during a building process;
receiving or determining digital representations of each of the one or more work units;
receiving or determining a building plan defining a target position for each of a plurality of bricks and a laying order for laying the plurality of bricks;
receiving or determining an initial position for at least part of the plurality of bricks;
receiving position and pose information from one of the one or more work units, relative to the visual reference markers or the building site, and updating the digital representation of the respective work unit and the building site based on the received position and pose information; and
transmitting, by the control system, commands to the one or more work units, the commands configuring the one or more work units to apply mortar and pick and lay bricks, wherein the commands are based on the digital representation of the building site, the digital representations of the respective work units, the initial position of the at least part of the plurality of bricks, and the building plan.

2. The method as claimed in claim 1, wherein determining a digital representation of a building site comprises:
receiving a 3D scan of the building site;
identifying, in the 3D scan, a plurality of first features with a known position relative to a to-be-build structure;
determining an origin and an orientation of a coordinate system based on the positions of the plurality of first features;
identifying, in the 3D scan, one or more second features with a known size and/or a known distance between each other;
determining a scale of the coordinate system based on the size of and/or distance between the one or more second features; and
determining the digital representation of the building site based on the 3D scan of the building site and based on the coordinate system.

3. The method as claimed in claim 1 or 2, wherein identifying a plurality of visual reference markers comprises:
identifying, in the digital representation, the plurality of visual reference markers; and
determining the positions of the plurality of visual reference markers in the coordinate system associated with the building site.

4. The method as claimed in any one of claims 1-3, wherein determining a building plan comprises:
receiving or determining a planned size of a to-be-built structure, e.g., a wall segment;
receiving or determining building parameters, e.g., brick size and masonry bond;
determining a position of each of a plurality of bricks in the to-be-built structure; and
determining a laying order defining an order in which the bricks are to be laid.

5. A control system for a modular bricklaying system, the modular bricklaying system comprising one or more work units, the control system comprising a communication module for communicating with the one or more work units, a memory for storing computer-readable instructions, and a processor communicatively coupled to the memory and configurable to execute the computer-readable instructions, wherein the processor is configured to, in response to executing the computer-readable instructions, perform the method as claimed in any one of claims 1-4.

6. A method for controlling a work unit in a modular bricklaying system, the method comprising:
determining a position and pose of the work unit relative to one or more visual reference markers, the visual reference markers having a known position with respect to a building site and/or with respect to one or more other work units, or relative to the building site and/or the one or more other work units, preferably the position and pose being determined with a precision of better than 1 cm, more preferably with a precision of about 1 mm;
transmitting the determined position and pose to a control system;
receiving commands from the control system; and
in response to receiving the commands, controlling at least one actuator.

7. A work unit for use in a modular bricklaying system, the modular bricklaying system comprising a control system, the work unit comprising:
at least one actuator,
a communication module for communicating with the control system,
a memory for storing computer-readable instructions, and
a processor, communicatively coupled to the memory, configurable to execute the computer-readable instructions, wherein the processor is configured to, in response to executing the computer-readable instructions, perform the method as claimed in claim 6.

8. The work unit as claimed in claim 7, further comprising:
an optical camera and an image processor, wherein the image processor is configured to determine the position of the work unit based on images captured by the camera; and/or
a receiver and a data processor, and wherein the building site and/or the one or more other work units are provided with transmitting beacons, and wherein the data processor is configured to determine the position of the work unit based on signals received by the receiver.

9. The work unit as claimed in claim 7 or 8, wherein the work unit is configured to move essentially freely relative to the building site and/or the one or more other work units, preferably the work unit comprising wheels configured for riding over a building site or a caterpillar.

10. The work unit as claimed in any one of claims 7-9, wherein the work unit is configured to level itself, preferably the work unit comprising three or more levelling feet or a platform that is rotatable over two horizontal axes.

11. The work unit as claimed in any one of claims 7-10, wherein the work unit has a mass and/or one or more spatial dimensions based on a typical human mass or spatial dimensions and/or constrained by a construction or safety protocol, preferably the work unit having a mass of less than or equal to 150-250 kg and/or a height of less than or equal to 2.0-2.3 m and/or a width of less than or equal to 0.7 m and/or a length of less than or equal to 1.0-1.3 m.

12. The work unit as claimed in any one of claims 7-11, further comprising:
a hopper for storing and applying mortar, the hopper being movable relative to a base of the work unit, and wherein the at least one actuator is arranged to operate the hopper; and/or
a gripper for picking up and laying bricks, the gripper being movable relative to the base of the work unit, and wherein the at least one actuator is arranged to operate the gripper; and/or
a conveyor system for storing bricks, and wherein the at least one actuator is arranged to operate the conveyor system.

13. A modular system for bricklaying comprising a control system as claimed in claim 5 and one or more work units as claimed in any one of claims 7-12.

14. A computer program or suite of computer programs comprising at least one software code portion, the at least one software code portion, when run on a control system as claimed in claim 5, configuring the control system for executing the method steps according to any one of claims 1-4, or the at least one software code portion, when run on a work unit as claimed in any one of claims 7-12, configuring the work unit for executing the method steps according to claim 6.

15. A non-transient storage medium storing a computer program or suite of computer programs product as claimed in claim 14.
